# EUROPÄISCHE PATENTANMELDUNG

(11) **EP 0 610 989 A2**
(43) Veröffentlichungstag der Anmeldung: **17.08.1994**
(21) Anmeldenummer: 94200216.3
(22) Anmeldetag: 31.01.1994
(51) Int. Cl.: H04B 7/04

(54) **Funksystem mit Raumdiversitysender/-empfänger**

(30) Priorität: 05.02.1993 DE 4303355
(71) Anmelder: Philips Patentverwaltung GmbH, 22335 Hamburg (DE); Philips Electronics N.V., 5621 BA Eindhoven (NL)
(72) Erfinder: Vogel, Martin, Dr.-Ing., c/o Philips, D-20097 Hamburg (DE); van Kampen, Adrian, Dr.-Ing., c/o Philips, D-20097 Hamburg (DE)
(74) Vertreter: Volmer, Georg, Dipl.-Ing.

(57) **Zusammenfassung**

Die Erfindung bezieht sich auf ein Funksystem mit einer Sende-/ Empfangsvorrichtung mit mindestens zwei Antennen (1, 2, 5, 6). Es sind Detektoren (3) zur Messung von Zeitversätzen zwischen voneinander getrennt empfangenen Antennensignalen vorgesehen. Die Aussendung von Signalen erfolgt über verschiedene Antennen (5, 6). Es sind weiterhin Mittel (7) zur Einstellung von Zeitversätzen der Sendesignale, die den gemessenen Zeitversätzen entsprechen, vorgesehen.

## Beschreibung

Die Erfindung bezieht sich auf ein Funksystem mit mindestens einer Sende-/ Empfangsvorrichtung zum Senden und Empfangen über mehrere Antennen.

Beim sogenannten "Raum-Diversity" wird ein Signal über räumlich getrennte Antennen empfangen. Ein solches Signal hat aufgrund der räumlichen Trennung der Empfangsantennen unterschiedliche Wege zu durchlaufen und ist auf diesen Wegen unterschiedlichen Einflüssen ausgesetzt, die dieses Signal abschwächen oder verfälschen. Durch geeignete Kombination der Empfangssignale kann die Empfangsqualität verbessert werden.

Aus der britischen Patentanmeldung GB 2 237 706 A ist eine Sende-/Empfangsvorrichtung bekannt, bei der entweder zum Senden oder zum Empfangen mehrere Antennen vorgesehen sind. Zur Vermeidung von durch Interferenzen entstehenden Signalabschwächungen bzw. eventuellen Signalverlusten wird ein Sendesignal bei dieser bekannten Anordnung zeitlich verzögert über eine Vielzahl von Antennen gesendet. Zu diesem Zweck sind in die Sendezweige Verzögerungsglieder mit fester Zeitverzögerung eingebaut. Auf diese Weise erreicht man eine Dekorrelation der verzögerten Antennensignale. Auf der Empfangsseite wird mit Hilfe eines Equalisers aus diesen Signalen das Originalsignal rekonstruiert.

Der Erfindung liegt die Aufgabe zugrunde, einen verbesserten Empfang eines Funksignals zu ermöglichen.

Zur Lösung dieser Aufgabe ist ein Funksystem der eingangs genannten Art vorgesehen, bei dem der Empfang über mindestens zwei Antennen vorgesehen ist, bei dem Detektoren zur Messung von Zeitversätzen zwischen voneinander getrennt empfangenen Antennensignalen vorgesehen sind, bei dem die Aussendung von Signalen über verschiedene Antennen vorgesehen ist und bei dem Mittel zur Einstellung von Zeitversätzen der Sendesignale, die den gemessenen Zeitversätzen entsprechen, vorgesehen sind.

Die gemessenen Zeitversätze ergeben sich im wesentlichen aus den Laufzeitunterschieden eines Funksignals zu den verschiedenen Empfangsantennen. So ist der Weg vom Teilnehmer am anderen Ende der Funkverbindung zu den verschiedenen Empfangsantennen unterschiedlich lang. Die Wegdifferenzen ergeben sich aus dem Abstand der Empfangsantennen oder auch durch Reflexion des Funksignals an Hindernissen in der Funkstrecke. Da die Wegdifferenzen vom Standort des anderen Funkteilnehmers abhängen, steckt in den gemessenen Zeitversätzen eine Information über dessen Position. Die Zeitversätze der über die verschiedenen Antennen empfangenen Signale werden gemessen. Beim Sendevorgang wird ein Funksignal, das von einer gleichen Anzahl an Antennen gesendet wird, gemäß dem gemessenen Zeitversätzen verzögert gesendet. Beim Sendevorgang wird somit die beim Empfang erhaltene Information berücksichtigt.

Eine erste Möglichkeit zur Erzeugung von zeitlich verzögerten Sendesignalen ist die Verwendung eines einzigen Senders. In diesem Fall muß in jedem Sendezweig ein Verzögerungsglied angeordnet sein. Eine weitere Möglichkeit zur Erzeugung der Zeitversätze ist die Anordnung mehrerer Sender, deren Sendezeiträume durch eine Steuerungseinrichtung zeitlich verschoben werden. In diesem Fall sind keine Verzögerungsglieder notwendig.

Im Gegensatz zur oben angeführten britischen Patentanmeldung wird eine Korrelation anstelle einer Dekorrelation der Sendesignale angestrebt. Am Ort des Funkteilnehmers am anderen Ende der Funkverbindung treffen die zeitlich verzögerten Signale gleichzeitig ein und überlagern sich. Es ergibt sich ohne Erhöhung der Sendeleistung eine Erhöhung der Empfangsfeldstärke am Ort des anderen Funkteilnehmers. Mit Hilfe eines solchen Funksystems kann der Einfluß von bei Funkübertragung im allgemeinen vorhandenen Interferenzstörungen vermindert werden.

Prinzipiell ist die Erfindung sowohl in Funksystemen einsetzbar, die digitale Signale übertragen, als auch in Funksystemen, die analoge Signale übertragen. In digitalen Funksystemen erhält man bei gleicher Sendeleistung eine geringere Empfangsfeldstärke als bei analogen Systemen, da digitale Systeme eine größere Bandbreite als analoge Systeme erfordern. Aus diesem Grunde ist insbesondere bei digitalen Systemen der Einsatz des erfindungsgemäßen Funksystems besonders vorteilhaft.

Eine Weiterbildung der Erfindung ist dadurch gekennzeichnet, daß die Sende- und Empfangsantennen in Paaren, die jeweils eine Sende- und eine Empfangsantenne enthalten, angeordnet sind.

Ein Zeitversatz zwischen zwei Empfangssignalen ergibt sich wie oben ausgeführt im wesentlichen aus den Wegdifferenzen für ein Funksignal vom einen zum anderen Ende der Funkverbindung, wobei auf der Empfangsseite mehrere räumlich getrennte Antennen zum Empfang des Signals vorgesehen sind. Damit beim anschließenden Senden eines Funksignals über mehrere Antennen mit den gemessenen Zeitversätzen die Sendesignale am Ort des anderen Funkteilnehmers gleichzeitig eintreffen und somit dort die Empfangsfeldstärke erhöht wird, müssen die Sendesignale möglichst die gleichen Wege zurücklegen wie die Empfangssigale, deren Zeitversätze gemessen wurden. Diese Bedingung läßt sich besonders einfach und für alle möglichen Orte des anderen Funkteilnehmers dadurch erfüllen, daß die Sende- und Empfangsantennen in Paaren angeordnet sind. Bei räumlicher Anordnung in Paaren ist der Abstand zwischen den paarweise angeordneten Sende- und Empfangsantennen gering, so daß für jedes Antennenpaar Sende- und Empfangsweg nahezu identisch sind. Mit dieser Anordnung ist ein gleichzeitiges Senden und Empfangen möglich. Dies ist besonders dann vorteilhaft, wenn der andere Funkteilnehmer eine sich relativ zur Sende-/ Empfangsvorrichtung schnell bewegende Mobilstation darstellt. Relativbewegungen sind insbesondere störend, wenn der Abstand zwischen den Funkteilnehmern nur sehr gering, z.B. wenige hundert Meter, ist.

In einer anderen Weiterbildung der Erfindung sind in der Sende-/ Empfangsvorrichtung zum Senden und Empfangen gemeinsame Antennen vorgesehen.

Hierzu ist eine Entkoppelung von Sende- und Empfangspfad erforderlich. Je nach Anwendungsfall können als Entkoppelungsmittel beispielsweise Duplex-Filter oder auch Umschaltvorrichtungen vorgesehen sein. Gegenüber der Anordnung mit getrennten Sende- und Empfangsantennen ist nur die halbe Anzahl an Antennen zum Betrieb der Sende-/ Empfangsvorrichtung erforderlich. Das oben beschriebene Problem, daß beim Einsatz getrennter Antennen zum Senden und Empfangen durch deren räumlichen Abstand die Sende- und Empfangswege nicht völlig identisch sind, tritt hier nicht auf, da Sende- und zugehörige Empfangsantennen identisch sind und somit keinen räumlichen Abstand besitzen.

Eine Umschaltvorrichtung zum wechselweisen Koppeln der Antennen beim Senden an die Sendezweige bzw. beim Empfangen an die Empfangszweige der Sende-/ Empfangsvorrichtung ist besonders vorteilhaft für ein Funksystem, das als Halbduplex-System betrieben wird.

In einer weiteren Ausgestaltung der Erfindung ist vorgesehen, daß die Zeitversätze der Empfangssignale aus deren Quadraturkomponenten bestimmt werden.

Eine Messung der Zeitversätze ist prinzipiell sowohl aus den noch modulierten Empfangssignalen im Hochfrequenzbereich als auch aus den demodulierten Empfangssignalen im niederfrequenten Basisband-Bereich möglich. Quadraturempfänger stellen eine Möglichkeit dar, ein hochfrequentes Empfangssignal zu demodulieren, d. h. niederfrequente Quadraturkomponenten zu erzeugen. Man erhält die Quadraturkomponenten I (Inphase-Komponente) und Q (Quadratur-Komponente) eines modulierten Signals, indem man dieses mit einem Cosinus-bzw. einem Sinus-Signal der Modulations-frequenz multipliziert und die erhaltenen Signale anschließend einer Tiefpaß-Filterung unterzieht. Diese I und Q- Komponenten beschreiben das empfangene Signal im niederfrequenten Basisband vollständig.

Eine weitere vorteilhafte Ausbildung der erfindungsgemäßen Sende-/Empfangsvorrichtung ist dadurch gekennzeichnet, daß in jedem Empfangszweig ein Quadraturempfänger zur Demodulation der Empfangssignale vorgesehen ist und das eine Vorrichtung zur Synchronisation der Quadraturempfänger vorhanden ist.

Jeder Empfangszweig, also auch jeder Quadraturempfänger wird mit einem Antennensignal versorgt. Die Quadraturempfänger demodulieren wie schon oben beschrieben die Empfangssignale. Sie erzeugen die Quadraturkomponenten I und Q. Es hat sich gezeigt, daß bei einer solchen Anordnung von den Quadraturkomponenten I und Q nur dann auf einen eindeutigen Zeitversatz geschlossen werden kann, wenn die Quadraturempfänger den gemessenen Zeitversatz von einer gemeinsamen Zeitbasis ableiten. Aus diesem Grund ist eine Synchronisation durch einen gemeinsamen Oszillator vorgesehen, der an alle Quadraturempfänger gekoppelt ist.

Eine weitere Ausbildung der Erfindung ist dadurch gekennzeichnet, daß die Zeitversätze als Phasendifferenzen gemessen und eingestellt werden.

Die Phasendifferenz (Differenz der Phasenwinkel) von zwei Empfangssignalen läßt sich entweder aus den I-Komponenten oder den Q-Komponenten der Empfangssignale errechnen. Die gemessenen Zeitversätze können als Phasendifferenzen gedeutet werden, wenn man als Phasendifferenz zwischen zwei Signalen ganz allgemein deren zeitliche oder räumliche Verschiebung gegeneinander bezeichnet wird. Die Phasendifferenzen beziehen sich dabei auf die Modulationsfrequenz. Besonders vorteilhaft ist, daß die Phasendifferenzen der hochfrequenten modulierten Empfangssignale aus den niederfrequenten Quadraturkomponenten dieser Empfangssignale bestimmt werden können. Als Mittel zur Einstellung der Phasendifferenzen sind Phasenschieber in den Sendezweigen vorgesehen.

Besitzen die Empfangsantennen einen genügend kleinen Abstand (typisch kleiner als 1 Meter) und ist der Abstand der beiden Funkteilnehmer gering (im Bereich einiger hundert Meter), so sind die gemessenen Zeitversätze klein und entsprechen Phasendifferenzen, die 360 Grad nicht überschreiten. In diesem Fall ist die Berechnung der Phasendifferenz eindeutig und der Zeitversatz der Empfangssignale entspricht dem Zeitversatz der Sendesignale. Bei Zeitversätzen, die einer Phasendifferenz von größer als 360 Grad entsprechen, können die Quadraturkomponenten keine eindeutigen Ergebnisse mehr liefern. Die Berechnung der Phasendifferenz ergibt in diesem Fall einen Wert zwischen 0 und 360 Grad, obwohl die wirkliche Phasendifferenz um ein Vielfaches von 360 Grad größer ist. Die Phasendifferenz der Sendesignale wird von den Phasenschiebern also immer nur im Bereich von 0 bis 360 Grad eingestellt. Daraus ergibt sich, daß die Sendesignale am Ort des anderen Funkteilnehmers mit einer Phasendifferenz eines Vielfachen von 360 Grad (bezogen auf die hochfrequente Modulations-frequenz) eintreffen können. Ist der sich daraus ergebende Zeitversatz dieser Signale klein gegen die Periodendauer der niederfrequenten informationstragenden Frequenzanteile, so ist die konstruktive Überlagerung der Sendesignale am Ort des anderen Funkteilnehmers nur wenig gestört. Bei digitalen Signalen entspricht die Periodendauer der niederfrequenten Frequenzanteile der Periodendauer der Bits. Deshalb ist es vorteilhaft, bei digitalen Signalen die Zeitversätze klein gegen die Bitperiode zu halten. Der zeitliche Versatz eines Bits darf dabei die Zeitdauer eines Bits nicht überschreiten, da in diesem Fall keine konstruktive Überlagerung vorliegen wird.

Eine weitere Ausbildung der Erfindung ist dadurch gekennzeichnet, daß die Sende-/ Empfangsvorrichtung in Basisstationen eines Mobilfunksystems integriert ist.

In den Basisstationen sind Sende-/ Empfangsvorrichtungen mit mehreren Antennen vorgesehen, in den Mobilstationen wird mit nur einer Antenne empfangen und gesendet. Sind die Mobilstationen beispielsweise Handgeräte, so herrschen in diesen Platzprobleme vor und normalerweise wird nur eine Antenne eingebaut. Mit Hilfe des erfindungsgemäßen Funksystems ist es möglich, den technischen Aufwand für einen verbesserten Empfang auf die Basisstationen zu konzentrieren, wo im allgemeinen kein Platzmangel herrscht. Obwohl die Mobilstationen nur auf den Empfang mit einer Antenne ausgelegt werden, wird der Vorteil der beschriebenen Diversity-Technik auch in der Mobilstation ausgenutzt.

Ausführungsbeispiele der Erfindung werden an nachstehenden Figuren näher erläutert.

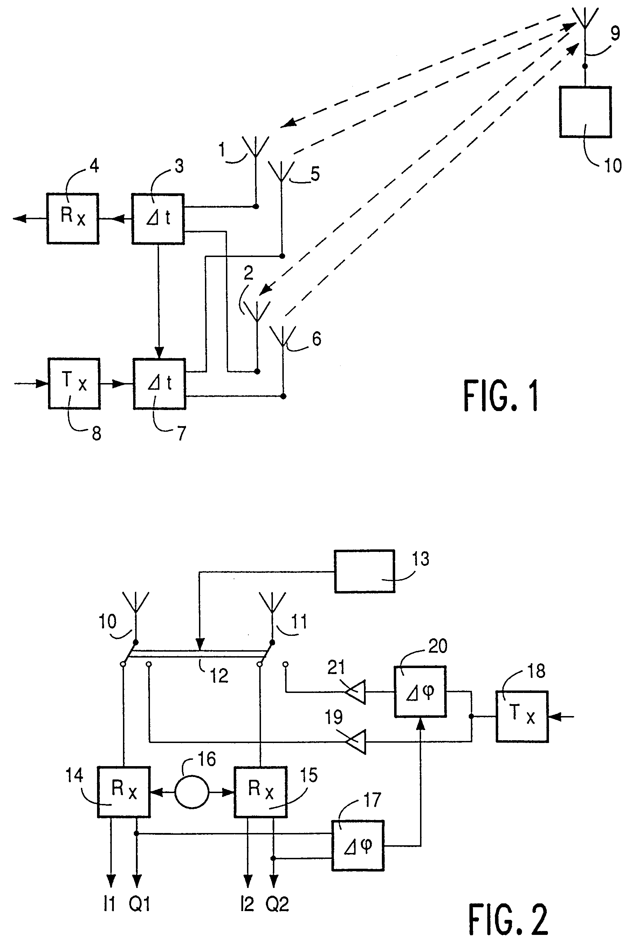

Es zeigen:
Fig. 1 ein Funksystem mit einer Sende-/ Empfangsvorrichtung mit in Paaren angeordneten Sende- und Empfangsantennen,
Fig. 2 eine Sende-/ Empfangsvorrichtung mit 2 Antennen, die sowohl zum Senden als auch zum Empfangen vorgesehen sind und
Fig. 3 eine Ausgestaltung der Sende-/ Empfangsvorrichtung des Funksystems aus Fig. 1
Das in Fig. 1 dargestellte Funksystem enthält eine Basisstation und eine Mobilstation. In der Basisstation ist eine Sende-/Empfangsvorrichtung mit zwei Empfangsantennen 1 und 2 vorgesehen. Zur Messung des Zeitversatzes von zwei Empfangssignalen ist an die beiden Empfangsantennen 1 und 2 eine Meßvorrichtung 3 gekoppelt. An diese Meßvorrichtung 3 ist eine Empfangsvorrichtung 4 gekoppelt. Diese dient zur Demodulation der Empfangssignale und zu deren Weiterverarbeitung. Weiterhin sind zwei Sendeantennen 5 und 6 vorgesehen. An diese Sendeantennen 5 und 6 ist eine Vorrichtung 7 gekoppelt, die einen Zeitversatz zwischen den beiden Sendesignalen einstellt. Die Sendesignale werden von einer Sendevorrichtung 8 erzeugt, die an die Vorrichtung zur Einstellung des Zeitversatzes der Sendesignale 7 gekoppelt ist. Die Vorrichtung 3 zur Messung des Zeitversatzes der Empfangssignale ist mit der Vorrichtung 7 zur Einstellung des Zeitversatzes der Sendesignale gekoppelt.

Der Zeitversatz, den die Anordnung 7 im Sendezweig einstellt, ist damit gleich dem Zeitversatz, der durch die Anordnung 3 aus den Empfangssignalen gemessen wird. Die dargestellte Mobilstation enthält eine Antenne 9 und eine Sende-/ Empfangsvorrichtung 10.

Wird von der Mobilstation über die Antenne 9 ein Signal gesendet, so wird dieses von der Basisstation über die Antennen 1 und 2 empfangen. Mit Hilfe der Meßvorrichtung 3 wird der Zeitversatz zwischen den beiden Antennensignalen gemessen. Bei einem anschließenden Sendevorgang wird von der Basisstation ein Signal mit Hilfe des Verzögerungsgliedes 7, das mit dem von der Meßvorrichtung 3 gemessenen Zeitversatz eingestellt wird, über die beiden Antennen 5 und 6 gesendet. Am Ort der Mobilstation überlagern sich diese beiden Sendesignale konstruktiv. Damit ist ist die Feldstärke gegenüber einer einfachen Übertragung mit nur einer Antenne am Ort der Mobilstation erhöht. Man erhält eine verbesserte Empfangsqualität am Ort der Mobilstation.

Die Sende-/ Empfangsvorrichtung mit mehreren Sende- und mehreren Empfangsantennen kann bei der vorliegenden Erfindung ebenso in der Mobilstation verwendet werden, so daß sich eine Feldstärkeerhöhung am Ort der Basisstation ergibt. Die Begriffe Basisstation und Mobilstation sind somit in der vorliegenden Beschreibung austauschbar.

In Fig. 2 ist ein weiteres Ausführungsbeispiel mit einer Sende-/Empfangsvorrichtung mit mindestens zwei Antennen angegeben. Die Sende-/ Empfangsvorrichtung enthält zwei Antennen, die sowohl zum Senden als auch zum Empfangen benutzt werden. Eine solche Sende-/ Empfangsvorrichtung kann besonders vorteilhaft in Halbduplex-Funksystemen eingesetzt werden, in denen in einem Funkkanal wechselweise gesendet und empfangen wird. Es sind zwei Antennen 10 und 11 vorgesehen, die sowohl zum Empfang als auch zum Senden von Signalen benutzt werden. An diese gekoppelt ein Umschalter 12, der die beiden Antennen 10 und 11 einerseits mit den zwei Empfangszweigen der Sende-/Empfangsvorrichtung und andererseits mit den zwei Sendezweigen der Sende-/Empfangsvorrichtung koppelt. Die Steuerung des Umschalters 12 erfolgt über eine Steuerungsvorrichtung 13, die entscheidet, ob gesendet oder empfangen wird. In den beiden Empfangszweigen sind zwei Empfänger 14 und 15 vorgesehen, die der Demodulation der von den Antennen 10 und 11 empfangenen Funksignalen dienen. Die beiden Empfänger 14 und 15 sind an eine Synchronisationsvorrichtung 16 gekoppelt. Diese Synchronisationsvorrichtung 16 dient der Synchronisation der Mischfrequenzen in den beiden Empfängern 14 und 15, mit denen die noch modulierten Empfangssignale multipliziert werden. Die beiden Empfänger 14 und 15 sind als Quadraturempfänger ausgeführt. An zwei Ausgängen des ersten Empfängers 14 liegen die Quadraturkomponenten I1 und Q1, an zwei Ausgängen des zweiten Empfängers 15 liegen die Quadraturkomponenten I2 und Q2. Ein Phasendetektor 17 zur Messung der Phasendifferenz der von den Antennen 10 und 11 empfangenen Signale ist an die zwei Ausgänge der Empfänger 14 und 15 gekoppelt, an denen die Quadraturkomponenten Q1 und Q2 anliegen. Aus diesen beiden Quadraturkomponenten, also aus den niederfrequenten demodulierten Empfangssignalen, ermittelt der Phasendetektor 17 die Phasendifferenz der Empfangssignale. Es wäre genauso möglich, die Phasendifferenz der Empfangssignale aus den Quadraturkomponenten I1 und I2 zu bestimmen. Gleiche Tiefpaß-Empfangsfilter in den Quadraturempfängern sind vorteilhaft, da sonst die Messung der Phasendifferenzen verfälscht würde.

Im Sendeteil der Sende-/Empfangsvorrichtung ist ein Sender 18 vorgesehen. Dieser versorgt zwei Sendezweige mit Sendesignalen. Im ersten Sendezweig ist zwischen Sender 18 und einem ersten Anschluß des Umschalters 12 ein erster Leistungsverstärker 19 angeordnet. Im zweiten Sendezweig liegt am Ausgang des Senders 18 ein Phasenschieber 20, der die vom Sender 18 erzeugten Sendesignale um eine einstellbare Phasendifferenz verschiebt. Die einstellbare Phasendifferenz des Phasenschiebers 20 entspricht der aus den beiden Quadraturkomponenten Q1 und Q2 mit Hilfe der Meßvorrichtung 17 ermittelten Phasendifferenz der von den Antennen 10 und 11 empfangenen Signale. Zwischen dem Phasenschieber 20 und einem zweiten Anschluß des Umschalter 12 ist ein zweiter Leistungsverstärker 21 angeordnet.

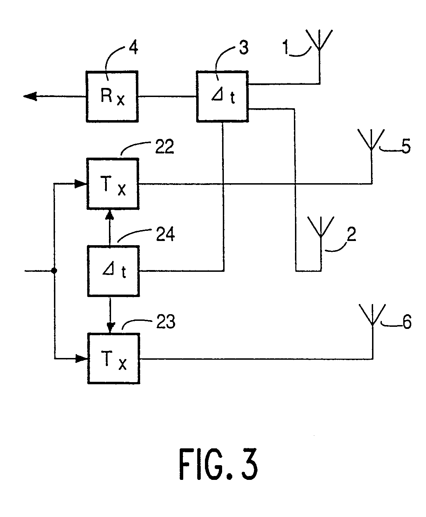

Die in Fig. 3 dargestellte Ausgestaltung der Sende-/ Empfangsvorrichtung des in Fig. 1 dargestellten Funksystems weist zwei von einer Steuerungseinrichtung 24 gesteuerte Sendevorrichtungen 22, 23 zur Erzeugung von Sendesignalen auf. Die Steuerungseinrichtung 24 ist mit der Meßvorrichtung 3 verbunden. Sie sorgt dafür, daß die Sendevorrichtungen 22, 23 mit dem von der Meßvorrichtung 3 gemessenen Zeitversatz zwischen den Empfangssignalen zeitversetzt senden, so daß die oben beschriebenen vorteilhaften Wirkungen eines Zeitversatzes zwischen den Sendesignalen erreicht werden.

Ein Einsatz eines Funksystems mit einer der beschriebenen Sende-/ Empfangsvorrichtungen ist in Mobilfunksystemen nach dem DECT-Standard (Digital European Cordless Telephone) vorteilhaft. In diesen Systemen beträgt der Abstand der beiden Funkteilnehmer im allgemeinen nur wenige hundert Meter. Man kann deshalb von Zeitversätzen ausgehen, die klein gegen die Zeitdauer eines Bits sind.

## Patentansprüche

1. Funksystem mit mindestens einer Sende-/ Empfangsvorrichtung, bei der
- der Empfang über mindestens zwei Antennen (1, 2) vorgesehen ist,
- Detektoren (3) zur Messung von Zeitversätzen zwischen voneinander getrennt empfangenen Antennensignalen vorgesehen sind,
- die Aussendung von Signalen über verschiedene Antennen (5, 6) vorgesehen ist und
- Mittel (7) zur Einstellung von Zeitversätzen der Sendesignale, die den gemessenen Zeitversätzen entsprechen, vorgesehen sind.

2. Funksystem nach Anspruch 1,
dadurch gekennzeichnet,
daß die Sende- und Empfangsantennen in Paaren, die jeweils eine Sendeantenne (1, 2) und eine Empfangsantenne (5, 6) enthalten, angeordnet sind.

3. Funksystem nach Anspruch 1,
dadurch gekennzeichnet,
daß zum Senden und zum Empfangen jeweils eine gemeinsame Antenne vorgesehen ist.

4. Funksystem nach Anspruch 1, 2, oder 3,
dadurch gekennzeichnet,
daß die Zeitversätze der Empfangssignale aus den Quadraturkomponenten der Empfangssignale bestimmt werden.

5. Funksystem nach Anspruch 4,
dadurch gekennzeichnet,
daß in jedem Empfangszweig ein Quadraturempfänger (13,14) zur Demodulation der Empfangssignale vorgesehen ist und daß Mittel zur Synchronisation der Quadraturempfänger (13,14) vorgesehen sind.

6. Funksystem nach Anspruch 1 bis 5,
dadurch gekennzeichnet,
daß die Zeitversätze als Phasendifferenzen gemessen und eingestellt werden.

7. Funksystem nach Anspruch 1 bis 6,
dadurch gekennzeichnet,
daß die Sende-/ Empfangsvorrichtung in Basisstationen eines Mobilfunksystems integriert ist.

8. Basisstation mit mindestens einer Sende-/ Empfangsvorrichtung, bei der
- der Empfang über mindestens zwei Antennen (1, 2) vorgesehen ist,
- Detektoren (3) zur Messung von Zeitversätzen zwischen voneinander getrennt empfangenen Antennensignalen vorgesehen sind,
- die Aussendung von Signalen über verschiedene Antennen (5, 6) vorgesehen ist und
- Mittel (7) zur Einstellung von Zeitversätzen der Sendesignale, die den gemessenen Zeitversätzen entsprechen, vorgesehen sind.

9. Mobilstation mit mindestens einer Sende-/ Empfangsvorrichtung, bei der
- der Empfang über mindestens zwei Antennen (1, 2) vorgesehen ist,
- Detektoren (3) zur Messung von Zeitversätzen zwischen voneinander getrennt empfangenen Antennensignalen vorgesehen sind,
- die Aussendung von Signalen über verschiedene Antennen (5, 6) vorgesehen ist und
- Mittel (7) zur Einstellung von Zeitversätzen der Sendesignale, die den gemessenen Zeitversätzen entsprechen, vorgesehen sind.
